(19) Europäisches Patentamt
European Patent Office
Office européen des brevets

(11) **EP 2 581 727 B1**

(12) **EUROPÄISCHE PATENTSCHRIFT**

(45) Veröffentlichungstag und Bekanntmachung des Hinweises auf die Patenterteilung:
**25.11.2020 Patentblatt 2020/48**

(51) Int Cl.:
***G01N 19/02*** *(2006.01)*

(21) Anmeldenummer: **12185197.6**

(22) Anmeldetag: **20.09.2012**

(54) **Vorrichtung und Verfahren zur Ermittlung von Reibwerten**

Method and device for determining friction values

Dispositif et procédé destinés à déterminer des coefficients de frottement

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.10.2011 DE 102011084451**

(43) Veröffentlichungstag der Anmeldung:
**17.04.2013 Patentblatt 2013/16**

(73) Patentinhaber: **Krones AG**
**93073 Neutraubling (DE)**

(72) Erfinder:
• **Hüttner, Johann**
  **84066 Mallersdorf-Pfaffenberg (DE)**
• **Seger, Martin**
  **92318 Neumarkt i.d.Opf. (DE)**

(74) Vertreter: **Grünecker Patent- und Rechtsanwälte PartG mbB**
**Leopoldstraße 4**
**80802 München (DE)**

(56) Entgegenhaltungen:
**EP-A1- 1 790 968    WO-A2-2010/063040**

**Beschreibung**

Die Erfindung betrifft eine Vorrichtung und ein entsprechendes Verfahren zur Ermittlung von Reibwerten bei Reibung von Behältern, die auf einem Transporteur transportiert werden, an Geländern des Transporteurs, wobei die Behälter zwischen beidseitig laufenden Geländern geführt werden, mit einem Messtisch und einem ersten Sensor, der auf dem Messtisch befestigt ist gemäß dem Oberbegriff des Patentanspruchs 1.

In Anlagen zur Behandlung von Behältern, beispielsweise Flaschen und insbesondere Kunststoffflaschen etwa aus Polyethylenterephthalat (PET) werden die Behälter häufig auf ein- oder mehrbahnigen Transportstrecken, sogenannten Transporteuren, transportiert. Ein typisches Beispiel ist eine Abfüllanlage zur Abfüllung von Getränken in PET-Behälter/-Flaschen. Um ein seitliches Umkippen der Behälter zu verhindern, werden typischerweise beidseitig laufende Geländer, also links und rechts laufende Geländer an den Transporteuren verwendet. Dabei treten auf den Transportstrecken insbesondere Verbreiterungen oder Verengungen auf. Es gibt also Übergänge von einbahnigen auf mehrbahnige Transporteure und umgekehrt von mehrbahnigen Transporteuren auf eine geringere Zahl von Bahnen, insbesondere auf einbahnige Transporteure. Dabei gibt es sogenannte Staubereiche, in denen eine große Zahl von Flaschen einen Staudruck aufbauen können, der auf die Geländer des Transporteurs wirkt. Ebenso kann sich in einer ein- oder mehrbahnigen Zuführung vor einem Behandlungselement der Anlage ein Staudruck aufbauen. Der Staudruck wird immer auch dazu führen, dass es Kraftanteile bei der Bewegung der Behälter gibt, die nicht in Transportrichtung zeigen, sondern senkrecht dazu angreifen, also auf die Geländer wirken. Dabei entsteht die Frage, wie stark die Reibung der Behälter an den Geländern des Transporteurs insbesondere in solchen Bereichen sein wird.

Im Stand der Technik diskutiert die DE 33 40 457 A1 die Transporteigenschaften von Plattenbandförderern im Hinblick auf eine Beeinflussung der Reibung von Flaschen an der Bandoberfläche, etwa durch Veränderung der Bandgeschwindigkeit oder durch Beaufschlagen der Transportbänder mit Gleit- oder Schmiermitteln. Um Informationen hinsichtlich der Beeinflussung zu erhalten, soll ein oberhalb der Förderebene vorgesehener Ausleger das zu transportierende Gefäß mit dem Förderband in Kontakt bringen und es soll der dadurch hervorgerufene Ausschlag des Auslegers ein Signal zur Beeinflussung des Förderers liefern.

Die JP 55125429 A diskutiert die Verwendung eines mit Messonden präparierten Testbehälters, der eine zu untersuchende Transportstrecke durchläuft, um Reibungskräfte, Druckwerte und Stoßkräfte, die während des Transports auf den Testbehälter einwirken, aufzuzeichnen.

Die EP 1 790 968 A1 und die EP 1 790 968 A1 offenbaren eine Messung der Reibung zwischen Behälterboden und Transportband.

Dabei ist die Bestimmung/Ermittlung von Reibwerten, auch Reibungskoeffizienten genannt, in den oben benannten Bereichen einer Anlage jedoch sehr schwierig. Das liegt insbesondere an der sich verändernden "Klebrigkeit" der Behälter. Frisch produzierte Behälter haben andere Oberflächeneigenschaften als bereits gelagerte Behälter und noch wieder andere Eigenschaften als mehrfach verwendete Behälter.

Bei der Betrachtung von Reibung von zwei Körpern aneinander wird zwischen Haftreibung, Gleitreibung und Rollreibung unterschieden. Dabei ist es immer möglich, die Beschreibung so zu wählen, dass ein Körper als ruhend betrachtet wird während die Reibung des anderen Körpers an oder auf dem ruhenden Körper betrachtet wird. Bei Haftreibung liegt zunächst ein statisches Problem vor. Die Haftreibung muss überwunden werden, wenn ein Körper, der zunächst mit einem anderen Körper in Kontakt ist, beispielsweise auf diesem ruht, in Bewegung gesetzt werden soll. Der Körper geht dann in die Gleit- oder Rollreibung über. Die Rollreibung ist im Allgemeinen sehr viel kleiner als die Gleitreibung und Haftreibung und ist im Folgenden weniger wichtig. Die allgemeine Formel von Coulomb für alle drei Arten von Reibung ist dabei

$$F_R = \mu \cdot F_N,$$

wobei $F_R$ die Reibungskraft/Reibkraft, $F_N$ die Normalkraft und $\mu$ den Reibungskoeffizienten/Reibwert/Reibzahl bezeichnen. Die Reibungskraft $F_R$ wirkt dabei stets parallel zur Berührungsfläche der Körper. Die Normalkraft $F_N$ ist die Kraft, mit der der eine Körper auf den anderen Körper, beispielsweise auf eine Unterlage, einwirkt. Für die Reibwerte gilt allgemein $\mu_{Gleit} < \mu_{Haft}$ und $\mu_{Roll} << \mu_{Gleit}$. Der Reibwert $\mu$ ist eine dimensionslose Zahl, die sich durch Normierung der Reibkraft $F_R$ mit der Normalkraft $F_N$ ergibt.

Aufgrund der oben skizzierten Probleme ist es Aufgabe der vorliegenden Erfindung, das Zusammenwirken zwischen Behältern und Geländern und insbesondere die Reibung zwischen Behältern und Geländern unter Produktionsbedingungen quantitativ zu erfassen.

Diese Aufgabe wird mit einer Vorrichtung gemäß Patentanspruch 1 und einem Verfahren gemäß Patentanspruch 10 gelöst.

Die Erfindung stellt eine Vorrichtung bereit zur Ermittlung von Reibwerten bei Reibung von Behältern, die auf einem Transporteur transportiert werden, an Geländern des Transporteurs, wobei die Behälter zwischen beidseitig verlaufenden Geländern geführt werden, umfassend: einen Messtisch; einen ersten Sensor, der auf dem Messtisch befestigt ist, wobei wenigstens ein Abschnitt des Geländers im Bereich des Messtischs relativ zum Messtisch beweglich ausgebildet ist und der Abschnitt wenigstens eine Bewegung in eine Richtung, genannt x-Richtung, ausführen kann, die im Wesentlichen parallel zur Transportrichtung des Transporteurs ist, wobei der erste Sensor eine Kraft misst, mit der der bewegliche Abschnitt des Geländers während des Transports der Behälter auf dem Transporteur bewegt oder gedrängt wird. Im einfachsten Fall ist unter einen Messtisch eine Führung, vorzugsweise eine Linearführung und besonders vorzugsweise mit Rollreibung, zu sehen, mit der der bewegliche Abschnitt des Geländers entlang der Transportrichtung geführt ist.

Mit der erfindungsgemäßen Vorrichtung kann also vor Ort und inline direkt am Transporteur gemessen und die Reibung unter Produktionsbedingungen oder gar während der Produktion quantitativ betrachtet werden. Mehr noch können entsprechende Vorrichtungen an verschiedenen Stellen in einer Vorrichtung zur Behandlung von Behältern, etwa einer Abfüllanlage, verwendet werden. In der Vorrichtung können die Geländer des Transporteurs wenigstens an einer Stelle auf einer Seite aufgetrennt werden. Der betrachtete Geländerabschnitt kann in die Messvorrichtung integriert werden und dient gleichzeitig weiterhin als Führung für die zu transportierenden Behälter. Der bewegliche Geländerabschnitt wird aufgrund der Reibung etwas in Transportrichtung mitgenommen, wodurch sich eine Auslenkung des Geländerabschnitts bestimmen lässt. Beispielsweise für einen Kraftmesser mit eingebauter Feder mit bekannter Federkonstante kann diese Auslenkung in Transportrichtung sofort als eine Kraft angezeigt und weitergegeben werden. Diese Kräfte in x-Richtung können auch als Längskräfte bezeichnet werden. Es können ebenso durch eine Mehrzahl von Sensoren, beispielsweise zwei oder drei oder auch mehr Sensoren zur Messung eingesetzt werden, wobei die Anzahl der Sensoren von den Messbereichen der Sensoren abhängen kann.

Der erste Sensor kann ein Dehnungsmessstreifen oder ein piezoelektrischer Sensor sein, der außen am Geländerabschnitt angebracht ist. Der Dehnungsmessstreifen oder piezoelektrische Sensor dehnt sich unter Einwirkung von Längskräften auf das Geländer, die im Wesentlichen parallel zur Transportrichtung wirken. Dabei können Dehnungsmessstreifen als Draht, Folien oder Halbleiterstreifen auf das Geländer aufgeklebt werden und erlauben eine sehr kompakte Anordnung, um die Längskräfte zu bestimmen.

In einer weiteren Weiterbildung kann der erste Sensor auf dem Messtisch befestigt sein, wobei der bewegliche Abschnitt der Geländer eine Bewegung in eine Richtung, genannt x-Richtung, ausführen kann, die im Wesentlichen parallel zur Transportrichtung ist, wobei der erste Sensor eine Kraft messen kann, mit der der bewegliche Abschnitt des Geländers in x-Richtung während des Transports der Behälter bewegt oder gedrängt wird.

Die Vorrichtung kann ferner eine Steuereinheit und eine Speichereinheit umfassen, wobei die Steuereinheit die Messwerte des ersten Sensors auf der Speichereinheit speichert und so ausgebildet ist, dass sie basierend auf den Messwerten des ersten Sensors unter Berücksichtigung von Daten bezüglich von Querkräften, die im Wesentlichen senkrecht zur Transportrichtung des Transporteurs durch die Behälter auf die Geländer ausgeübt werden, die Reibwerte bestimmen kann.

Dabei kann die Steuereinheit beispielsweise eine interne Steuereinheit, etwa ein Computer sein. Die Steuereinheit kann ebenfalls beispielsweise drahtlos mit einem Steuercomputer verbunden sein. Die Daten, die mit dem Sensor gemessen werden, können auf einer Speichereinheit gespeichert und abgerufen werden. Hierdurch bieten sich ferner Möglichkeiten, die Daten zu verschiedenen Zeiträumen vergleichen zu können und so auch eine zeitliche Abhängigkeit der Entwicklung der gemessenen Daten betrachten zu können. Dabei können die Messungen regelmäßig in bestimmten Zeitabständen ausgeführt werden. Die Speichereinheit kann eine geeignete Speichereinheit, etwa eine Festplatte oder einen Flashspeicher umfassen.

Die Daten bezüglich der Querkräfte dienen zur Normierung der gemessenen Reibkräfte, also um daraus dimensionslose Reibwerte zu erhalten. Alternativ können auch relative Reibkräfte, beispielsweise in Bezug auf eine mittlere Reibkraft als dimensionslose Größe betrachtet werden und Abweichung davon in Prozent betrachtet werden. Die Querkräfte können dabei vorgegeben, also vordefiniert sein. Dabei können Werte für die Querkräfte durch eine separate Messung unabhängig von der Vorrichtung gemessen werden oder aufgrund von empirisch ermittelten Daten vorgegeben werden, um eine geeignete Normierungsgröße zu erhalten.

Bei einer vorteilhaften Weiterbildung ist die Steuereinheit beispielsweise so ausgebildet, dass sie die Reibwerte und/oder die Messwerte des ersten Sensors mit einem korrespondierenden Schwellwert vergleicht und vorbeugende und/oder korrigierende Maßnahmen einleitet, wenn der korrespondierende Schwellwert überschritten wird.

Die oben ermittelten Reibwerte oder Reibkräfte, beispielsweise die relativen Reibkräfte, können jeweils mit einer korrespondierenden Schwelle verglichen werden. Bei Überschreitung der Schwelle können vorbeugende und/oder korrigierende Maßnahmen eingeleitet werden. Mögliche Maßnahmen können je nach Größe der Abweichungen respektive der Überschreitung der korrespondierenden Schwellen zunächst darauf zielen, die Produktion nicht anzuhalten, sondern mögliche Hemmnisse zu mindern, siehe unten.

In der Vorrichtung sind beispielsweise die Daten bezüglich der Querkräfte vorgegebene Daten, die beispielsweise auf der Speichereinheit gespeichert sind.

Die Daten bezüglich der Querkräfte können unabhängig und zu einem anderen Zeitpunkt ermittelt werden als die aktuell gemessenen Reibungskräfte, die mit Hilfe des ersten Sensors gemessen werden können. Daher können zur Normierung dieser Reibungskräfte gespeicherte Daten abgerufen und verwendet werden. Die Daten bezüglich der Querkräfte können jedoch auch innerhalb der Messvorrichtung ermittelt werden.

Dazu kann die Vorrichtung einen zweiten Sensor umfassen, der eine Kraft misst, die im Wesentlichen senkrecht zur x-Richtung und im Wesentlichen parallel zur Ebene des Transporteurs wirkt (y-Richtung) und auf den beweglichen Abschnitt des Geländers während des Transports der Behälter auf dem Transporteur ausgeübt wird.

Der zweite Sensor kann ebenfalls ein Dehnungsmessstreifen oder ein piezoelektrischer Sensor sein, der außen am Geländerabschnitt und im Wesentlichen parallel zur Transportrichtung angebracht ist.

Der Dehnungsmessstreifen oder piezoelektrische Sensor ist also typischerweise außen auf dem Geländer angebracht und dehnt sich unter Einwirkung von Druck- oder Dehnungskräften auf das Geländer, die im Wesentlichen senkrecht zur Transportrichtung wirken. Dabei können Dehnungsmessstreifen als Draht, Folien oder Halbleiterstreifen auf das Geländer aufgeklebt werden und erlauben eine sehr kompakte Anordnung, um die Querkräfte zu bestimmen.

In einer weiteren Weiterbildung kann der zweite Sensor auf dem Messtisch befestigt sein, wobei der bewegliche Abschnitt der Geländer zusätzlich eine Bewegung in eine Richtung, genannt y-Richtung, ausführen kann, die im Wesentlichen senkrecht zur x-Richtung und im Wesentlichen parallel zur Ebene des Transporteurs ist, wobei der zweite Sensor eine Kraft messen kann, mit der der bewegliche Abschnitt des Geländers in y-Richtung während des Transports der Behälter bewegt wird.

Durch die Verwendung des zweiten Sensors kann zusätzlich die Bewegung des Geländers in y-Richtung, also im Wesentlichen senkrecht zur x-Richtung und damit in Transportrichtung gemessen werden. Es versteht sich, dass die Kraft in der respektive parallel zur Ebene des Transporteurs betrachtet wird. Der zweite Sensor kann in seiner Funktion dem ersten Sensor ähnlich sein. Wiederum können ebenso mehrere Sensoren als zweiter Sensor verwendet werden.

In der Vorrichtung kann die Steuereinheit so ausgebildet sein, dass sie die Messwerte des zweiten Sensors auf der Speichereinheit speichert und basierend auf den Messwerten des ersten Sensors unter Berücksichtigung der Daten bezüglich der Querkräfte, die im Wesentlichen senkrecht zur Transportrichtung des Transporteurs durch die Behälter auf die Geländer ausgeübt werden, die Reibwerte bestimmt, wobei die Daten bezüglich der Querkräfte auf den Messwerten des zweiten Sensors basieren.

Die mit Hilfe des zweiten Sensors gemessenen Messwerte können ähnlich wie die mit dem ersten Sensor gemessenen Messwerte mittels der Steuereinheit auf der Speichereinheit gespeichert werden. Die Messungen erfolgen im Wesentlichen gleichzeitig, so dass zum Zeitpunkt der Messung ein Wertepaar für die Reibungskraft in x-Richtung und die Querkraft, also die Normalkraft senkrecht dazu zur Verfügung steht. Hierdurch ergibt sich der weitere Vorteil, dass zur Normierung der in x-Richtung gemessenen Kraft keine vorgegebenen Werte, wie oben beschrieben mehr benutzt werden müssen, sondern es können die Reibwerte aus dem mit den beiden Sensoren gemessenen Wertepaar bestimmt werden. Wie bereits oben beschrieben, kann auch die zeitliche Entwicklung der Reibwerte betrachtet werden und es können regelmäßige Messungen und Bestimmungen der Reibwerte erfolgen. Darüber hinaus ist es auch weiterhin möglich, externe Daten für die Querkräfte im Vergleich mit den ermittelten Querkräften, also Normalkräften, zu betrachten und zu vergleichen.

In der Vorrichtung kann die Steuereinheit so ausgebildet sein, dass sie die Reibwerte und/oder die Messwerte des zweiten Sensors mit einem entsprechenden Schwellwert vergleicht und vorbeugende und/oder korrigierende Maßnahmen einleitet, wenn der entsprechende Schwellwert überschritten wird.

In vorteilhafter Weise können die vorbeugenden Maßnahmen eine Wartung des Transporteurs umfassen, und die korrigierenden Maßnahmen können wenigstens eine aus den folgenden Maßnahmen zur Reduzierung der Reibung umfassen: Hinzufügen von Additiven, beispielsweise Schmierstoffen, beim Fertigungsprozess der Behälter oder Vorformlinge, Aufbringen von Gleitmitteln oder Aufsprühen von Wasser auf die Geländer des Transporteurs, Aufsprühen von Wasser auf die Behälter, Aufbringen von Gleitmittel auf die Vorformlinge oder allgemein das Verändern von Prozessparametern bei der Herstellung von Vorformlingen oder Behältern. Diese Maßnahmen können beispielsweise durch die Steuereinheit eingeleitet oder können auch einem Operateur/Nutzer der Anlage vorgeschlagen/signalisiert werden, der dann die Entscheidung über das Einleiten der Maßnahmen treffen kann.

Die vorbeugenden Maßnahmen können ein Wartung des Transporteurs oder von Teilen der Anlage umfassen. Die korrigierenden Maßnahmen können darauf abzielen, den Produktionsbetrieb aufrecht zu erhalten und beispielsweise eine erhöhte, unerwünschte Reibung von Behältern an den Geländern zu reduzieren.

Die Vorrichtung kann ferner eine erste Schiene umfassen, die auf dem Messtisch befestigt ist und die im Wesentlichen in x-Richtung zeigt, wobei die Bewegung des Abschnitts des Geländers mittels der ersten Schiene in x-Richtung erfolgen kann.

Der Geländerabschnitt kann also geeignet auf einer Platte montiert sein, die typischerweise mit ein oder mehreren Führungswagen oder Führungsrädern auf der Schiene gleitet oder rollt. Dadurch wird die Bewegung des Geländerabschnitts in einfacher und robuster Weise in eine spezifische Richtung umgesetzt. Die Gleit- oder Rollreibung auf der Schiene ist dabei deutlich kleiner als die zu untersuchende Reibung zwischen den Behältern und Geländer. Es versteht sich, dass auch mehrere, parallel Schienen verwendet werden können.

Die Vorrichtung kann ferner eine zweite Schiene umfassen, die auf dem Messtisch befestigt ist und die im Wesentlichen in y-Richtung zeigt, wobei die Bewegung des Abschnitts des Geländers mittels der zweiten Schiene in y-Richtung erfolgen kann.

Der Geländerabschnitt kann also auch für die y-Richtung geeignet auf einer Platte montiert sein, die typischerweise mit ein oder mehreren Führungswagen oder Führungsrädern auf der Schiene gleitet. Dadurch wird die Bewegung des Geländerabschnitts in einfacher und robuster Weise in eine spezifische Richtung umgesetzt. Die Gleit- oder Rollreibung auf der Schiene ist wiederum deutlich kleiner als die zu untersuchende Reibung zwischen den Behältern und Geländer. Es versteht sich, dass auch für die betrachtete y-Richtung mehrere Schienen verwendet werden können, die parallel laufen.

In der Vorrichtung kann der Messtisch eine Grundplatte umfassen, wobei die erste Schiene auf der Grundplatte befestigt ist, wobei auf der ersten Schiene sich eine weitere Platte bewegen kann, wobei die Bewegung der weiteren Platte in die Richtung erfolgt, die der Richtung der ersten Schiene entspricht, wobei auf der weiteren Platte die zweite Schiene befestigt ist, wobei auf der zweiten Schiene die Bewegung des Abschnitts des Geländers in die Richtung erfolgen kann, die der zweiten Schiene entspricht; oder wobei die zweite Schiene auf der Grundplatte befestigt ist, wobei auf der zweiten Schiene sich eine weitere Platte bewegen kann, wobei die Bewegung der weiteren Platte in die Richtung erfolgt, die der Richtung der zweiten Schiene entspricht, wobei auf der weiteren Platte die erste Schiene befestigt ist, wobei auf der ersten Schiene die Bewegung des Abschnitts des Geländers in die Richtung erfolgen kann, die der ersten Schiene entspricht.

Durch die beschriebene Anordnung können die Bewegungen und damit die Kraftmessung des Geländerabschnitts in x-Richtung und in y-Richtung entkoppelt werden. Dabei bleibt die Messvorrichtung kompakt auf den Messtisch beschränkt, der im Wesentlichen statisch fixiert bleibt. Die Reihenfolge der Platten, die sich in x-Richtung respektive in y-Richtung bewegen können, kann dabei beliebig gewählt werden.

Die Erfindung stellt ferner ein Verfahren bereit zur Ermittlung von Reibwerten bei Reibung von Behältern, die auf einem Transporteur transportiert werden, an Geländern des Transporteurs, wobei die Behälter zwischen den rechts und links laufenden Geländern geführt werden, wobei wenigstens ein Abschnitt der Geländer beweglich ausgebildet ist und der Abschnitt wenigstens eine Bewegung in eine Richtung, genannt x-Richtung, ausführen kann, die im Wesentlichen parallel zur Transportrichtung des Transporteurs ist, so dass eine Kraft gemessen werden kann, mit der der bewegliche Abschnitt des Geländers während des Transports der Behälter auf dem Transporteur bewegt wird.

Die Kraft in x-Richtung kann dabei mittels eines Dehnungsmessstreifens oder eines piezoelektrischen Sensors gemessen werden, der außen am Geländerabschnitt angebracht ist und sich unter Einwirkung von Längskräften auf das Geländer befindet.

In dem Verfahren können die Reibwerte bestimmt werden aus den Messwerten der Kraft auf den beweglichen Abschnitt des Geländers in x-Richtung unter Berücksichtigung von Daten bezüglich von Querkräften, die im Wesentlichen senkrecht zur Transportrichtung des Transporteurs durch die Behälter auf die Geländer ausgeübt werden.

Dabei können die gemessenen Reibwerte und/oder die Messwerte der Kraft in x-Richtung mit einem korrespondierenden Schwellwert verglichen werden und vorbeugende und/oder korrigierende Maßnahmen eingeleitet werden, wenn der korrespondierende Schwellwert überschritten wird.

Die Daten bezüglich der Querkräfte können vorgegebene Daten sein.

In dem Verfahren kann ferner eine Kraft gemessen werden, die in eine Richtung, genannt y-Richtung, die im Wesentlichen senkrecht zur x-Richtung und im Wesentlichen parallel zur Ebene des Transporteurs ist, auf den beweglichen Abschnitt des Geländers während des Transports der Behälter auf dem Transporteur ausgeübt wird.

Die Kraft in y-Richtung kann dabei mittels eines Dehnungsmessstreifens oder eines piezoelektrischen Sensors gemessen werden, der außen am Geländerabschnitt angebracht ist und im Wesentlichen parallel zur Transportrichtung angebracht ist.

In dem Verfahren kann der bewegliche Abschnitt der Geländer zusätzlich eine Bewegung in eine Richtung, genannt y-Richtung, ausführen kann, die im Wesentlichen senkrecht zur x-Richtung und im Wesentlichen parallel zur Ebene des Transporteurs ist, wobei die Kraft gemessen werden kann, mit der der bewegliche Abschnitt des Geländers in y-Richtung bewegt wird, während des Transports der Behälter auf dem Transporteur.

In dem Verfahren können die Reibwerte aus den Messwerten der Kraft in x-Richtung unter Berücksichtigung der Daten bezüglich der Querkräfte, die im Wesentlichen senkrecht zur Transportrichtung des Transporteurs durch die Behälter auf die Geländer ausgeübt werden, bestimmt werden, wobei die Daten bezüglich der Querkräfte auf den Messwerten bezüglich der Kraft in y-Richtung basieren.

In dem Verfahren können die Messwerte der Kraft in y-Richtung mit einem korrespondierenden Schwellwert verglichen werden und vorbeugende und/oder korrigierende Maßnahmen eingeleitet werden, wenn der korrespondierende Schwellwert überschritten wird.

Dabei können in dem Verfahren die vorbeugenden Maßnahmen eine Wartung des Transporteurs umfassen, und wobei die korrigierenden Maßnahmen wenigstens eine aus den folgenden Maßnahmen zur Reduzierung der Reibung umfassen: Hinzufügen von Additiven, beispielsweise Schmierstoffen, beim Fertigungsprozess der Behälter oder Vorformlinge, Aufbringen von Gleitmitteln oder Aufsprühen von Wasser auf die Geländer des Transporteurs, Aufsprühen von Wasser auf die Behälter, Aufbringen von Gleitmittel auf die Vorformlinge oder allgemein das Verändern von Prozessparametern bei der Herstellung von Vorformlingen oder Behältern.

Es gilt also: mittels der erfindungsgemäßen Vorrichtung und dem erfindungsgemäßen Verfahren können inline das Zusammenwirken von Behältern und Geländer quantitativ erfasst werden. Aus den gemessenen Reibungskräften können Reibungskoeffizienten ermittelt werden.

Zusätzlich ist es möglich, die Maschinengeschwindigkeit, also Transportgeschwindigkeit der Behälter mit auszuwerten. Dadurch können Zusammenhänge zwischen Aufschwingen (Druckänderungen), nichtlinearer Zunahme der Reibkräfte in Korrelation mit der Anlagenleistung oder das Pumpen der Behälter erfasst werden. Die Messvorrichtung mit dem Messtisch kann im einbahnigen Bereich am Transporteur unmittelbar vor einer Einlaufschnecke oder auch in einer einbahnigen Zuführung montiert werden. Ebenso ist es möglich, künstlich eine schräge Anlaufstelle an einem verbreiterten Transporteur zu schaffen oder einen Überschub zu nutzen, also einen Bereich, in dem sich die Anzahl der Bahnen des Transporteurs ändert. Die ermittelten Daten erlauben Rückschlüsse auf den Zustand der Geländer und der Behälter.

Der Erfindungsgegenstand wird anhand der nachfolgenden Zeichnungen beispielhaft erläutert.

Es zeigen:

Fig. 1: Allgemeine Verhältnisse beim Einwirken einer Druckkraft auf einen Behälter an einer schrägen Fläche, wobei der Behälter transportiert wird und die Druckkraft nicht in die Transportrichtung zeigt.

Fig. 2: Draufsicht auf eine Messvorrichtung an einem Transporteur entsprechend der vorliegenden Erfindung.

Fig. 3 Seitenansicht einer Messvorrichtung aus Figur 2 entsprechend der vorliegenden Erfindung.

Fig. 4 Seitenansicht einer weiteren Messvorrichtung ähnlich der in Figur 2 gezeigten Messvorrichtung entsprechend der vorliegenden Erfindung.

Fig. 5 Skizze eines Verfahrens zur Bestimmung von Reibwerten entsprechend der vorliegenden Erfindung.

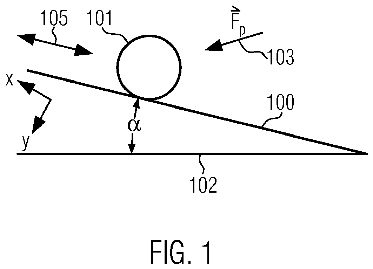

Figur 1 zeigt die allgemeinen Verhältnisse beim Einwirken einer Druckkraft auf einen Behälter an einer schrägen Fläche, beispielweise einem Geländer oder einer seitlichen Führungsschiene. In einer Draufsicht ist ein Behälter 101 gezeigt, der an eine schräge Fläche 100 unter Einwirkung der Kraft $\vec{F}_P$ gedrückt wird. Die schräge Fläche 100 ist gegenüber der ebenen Fläche 102 um den Winkel $\alpha$ geneigt. Die Transportrichtung für den Behälter 101, ist durch den Pfeil 105 angedeutet. Ein Koordinatensystem zur Definition der x-Richtung parallel zur Transportrichtung und der y-Richtung senkrecht zur Transportrichtung ist angezeigt. Die Komponenten der Kraft in x-Richtung respektive y-Richtung, also die Längs- und die Querkräfte, die auf die schräge Fläche ausgeübt werden, sind demnach

$$F_x = \left|\vec{F}_P\right|\cos\alpha, \qquad F_Y = \left|\vec{F}_P\right|\sin\alpha\,.$$

Es versteht sich, dass die oben durchgeführte Zerlegung auch für Geschwindigkeiten des Behälters analog angewendet werden könnte. Es versteht sich ferner, dass insbesondere für einen im Wesentlichen zylinderförmigen Behälter, etwa eine Flasche, diese auch einen Drehimpuls durch den Kontakt mit dem Geländer erhalten kann. Dieser soll aber hier nicht betrachtet werden, weil stets eine Vielzahl von Behältern eine Kraft erzeugen soll, die durch den Staudruck in Bereichen eines Transporteurs entsteht.

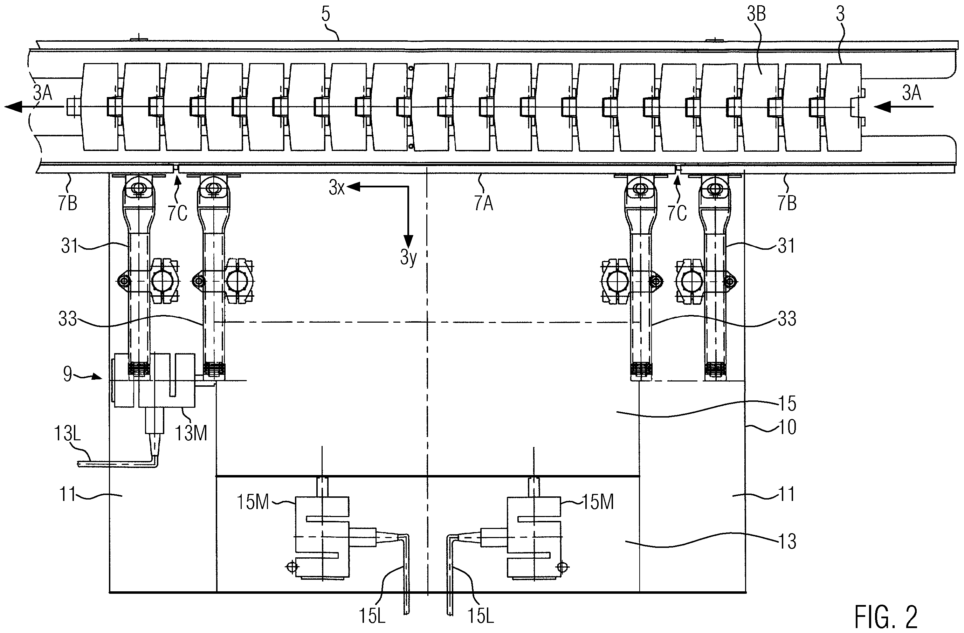

Die Figur 2 zeigt einen Transporteur 3 mit einer Vorrichtung 9 zur Ermittlung von Reibwerten entsprechend der vorliegenden Erfindung. Der Transporteur 3 transportiert Behälter, beispielsweise Flaschen (hier nicht gezeigt) in eine Transportrichtung, die durch den Pfeil 3A angegeben ist. Beispielhaft sind Segmente oder Platten 3B des Transporteurs gezeigt. Der hier gezeigte Transporteur 3 ist ein einbahniger Transporteur. Die x-Richtung ist mit dem Pfeil 3X bezeichnet, die entsprechend dazu senkrechte y-Richtung ist mit dem Pfeil 3Y bezeichnet. Die beiden Pfeile 3X und 3Y liegen in der Figurenebene.

Der Transporteur 3 besitzt, bezogen auf die Transportrichtung beidseitig Geländer, wobei rechte Geländer mit dem Bezugszeichen 5 und linke Geländer mit den Bezugszeichen 7B und 7A bezeichnet sind. Die Geländer 5 und 7A, 7B können im Wesentlich ähnlich sein. Diese Geländer können in einer geeigneten Höhe relative zur Ebene der Platten/Transportelemente 3B des Transporteurs vorgesehen sein. Dadurch kann gewährleistet werden, dass Behälter, etwa Flaschen, auf dem Transporteur nicht zur Seite fallen können und geführt werden können.

Das Geländer 7B in Figur 2 ist an zwei Stellen 7C geeignet aufgetrennt, wodurch der Geländerabschnitt 7A vom Geländer 7B separiert wird. Der Geländerabschnitt 7A kann wenigstens in x-Richtung, also in Transportrichtung beweglich ausgebildet sein. Zusätzlich kann der Geländerabschnitt 7A auch in y-Richtung, also senkrecht zur Transportrichtung beweglich ausgebildet sein. Dazu ist der Geländerabschnitt 7A in Figur 2 mit den Befestigungen/Haltern 33 auf der Platte 15 befestigt. Das Geländer 7B ist mit zwei weiteren Befestigungen/Haltern 31 fixiert. In der Figur 2 sind die Halter 31 rein beispielhaft auf einem Messtisch 10 auf einer Grundplatte 11 des Messtischs 10 befestigt, beispielsweise geschraubt. Es ist aber ebenso denkbar, die Halter 31 außerhalb der Vorrichtung 9 zu fixieren.

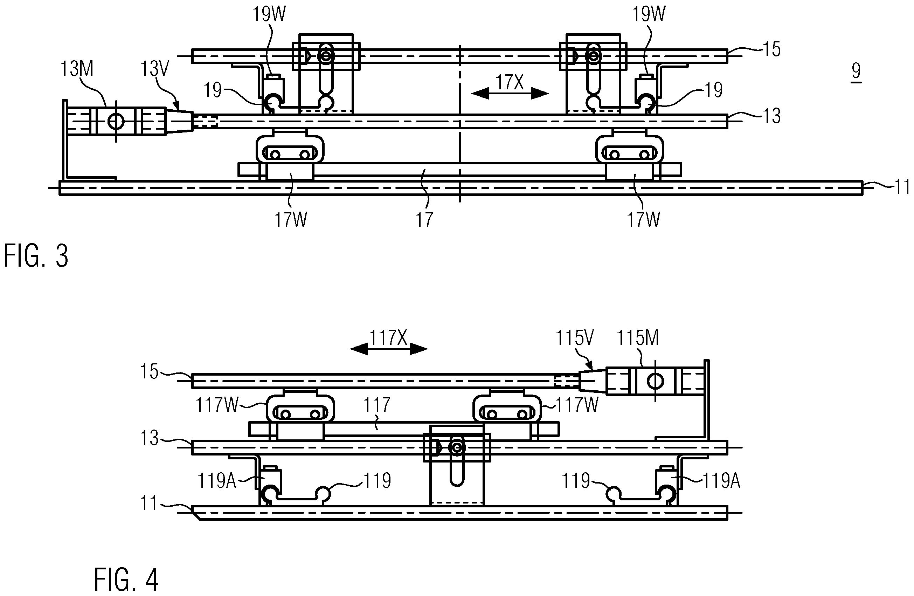

Die Platte 15 ist beweglich auf der darunterliegenden Platte 13 gelagert. Hierzu dienen beispielsweise Schienen, wie sie anhand von den Figuren 3 und 4 näher erläutert werden. Die Platte 13 ist wiederum beweglich auf der darunterliegenden Platte 11, der Grundplatte gelagert. Zur Gewährleistung der Beweglichkeit können wiederum Schienen dienen, wie das anhand der Figuren 3 und 4 näher erläutert ist. Die Platte 13 ist in der Darstellung von Figur 2 in x-Richtung, also in Transportrichtung beweglich. Mit anderen Worten: die Platte 13 bewegt sich in Längsrichtung. Mit der Platte 13 bewegt sich auch die Platte 15 in Längsrichtung. Die Platte 15 hat relativ zur Platte 13 keine Beweglichkeit in x-Richtung, so dass die Platte 15 einer Bewegung der Platte 13 in x-Richtung folgt. Ebenso ist der Geländerabschnitt 7A derart mit der Platte 15 verbunden, dass eine Bewegung des Geländerabschnitts 7A eine Bewegung der Platte 13 und damit der Platte 15 in x-Richtung bedeutet. D.h. die durch Reibung erzeugte Bewegung des Geländerabschnitts 7A führt dazu, dass bezüglich der x-Richtung die Platten 13 und damit 15 dieser Bewegung folgen.

Die Bewegung der Platte 13 relativ zur Grundplatte 11 ist also in direkter Weise korreliert mit der Bewegung des Geländerabschnitts 7A. Die entsprechende Bewegung der Platte 13 und damit des Geländerabschnitts 7A kann von einem Sensor 13M gemessen werden. Bei Reibung von Behältern an dem Geländerabschnitt 7A kann somit eine Kraft in Längsrichtung gemessen werden. In Figur 2 ist nur ein einziger Sensor 13M zur Messung der Verschiebung der Platte 13 und damit der Verschiebung des Geländerabschnitts 7A in x-Richtung, also in Längsrichtung, gezeigt. Es ist aber abhängig von der Anwendung möglich, mehrere Sensoren für diese Messung zu verwenden. Der Sensor 13M kann als Kraftsensor die Verschiebung der Platte 13 direkt in eine Kraft umrechnen und anzeigen oder ausgeben. Dazu kann der Sensor 13M geeignet mit einer Leitung 13L mit einem Steuergerät (hier nicht gezeigt) verbunden sein. Das Steuergerät kann die mittels des Sensors 13M genommenen Daten auswerten und beispielsweise auf einer Speichereinheit (nicht gezeigt) aufzeichnen.

Die Platte 15 ist im Wesentlich senkrecht zur Platte 13 in y-Richtung beweglich. Dadurch kann eine Bewegung des Geländerabschnitts 7A, die durch Querkräfte, also Kräfte in y-Richtung, verursacht wird, auf die Platte 15 übertragen werden. Die Bewegung der Platte 15 kann ähnlich wie bei der Platte 13 mit geeigneten Sensoren gemessen werden. Die Sensoren mit den Bezugszeichen 15M sind beispielhaft auf der Platte 13 fixiert und sind geeignet, die Bewegung der Platte 15 in y-Richtung zu erfassen. Das geschieht ähnlich bei dem Sensor 13M. Die Sensoren 13M und 15M können im Wesentlichen von der gleichen Art sein. Auch ist die Zahl der Messsensoren 15M nicht auf zwei Sensoren beschränkt. Es ist ebenso möglich, entsprechend der Anwendung mehrere oder auch nur einen Sensor zu verwenden. Die Sensoren 15M sind wiederum verbunden mit Leitungen 15L, mittels derer die Signale der Sensoren 15M zu einer Steuereinheit, beispielsweise einem Computer, weitergeleitet werden können. Die Sensoren 15M können, ähnlich wie die Sensoren 13M die Bewegung der Platte direkt in eine Kraft umrechnen und anzeigen.

Die Grundplatte 11 des Messtischs 10 sowie die Platten 13 und 15 können aus einem geeigneten Plattenmaterial gefertigt werden. Hierzu bieten sich Materialien mit hoher Steifigkeit und gleichzeitig geringem Gewicht an, damit Trägheitseffekte vermieden werden können.

Es ist ebenso denkbar, hier nicht gezeigt, die Platten 13 und 15 wahlweise arretierbar auszubilden, so dass für bestimmte Testmessungen nur die Bewegung in eine der beiden Richtungen x und y zugelassen werden kann, um die Querkräfte und die Längskräfte separat zu betrachten. Es ist ebenso möglich, auf die Außenseite des Geländerabschnitts 7A einen Dehnungsmessstreifen oder einen piezoelektrischen Sensor (beide hier nicht gezeigt) aufzubringen, beispielsweise aufzukleben. Dadurch kann eine Messung der Längs- und/oder Querkräfte in x- bzw. y-Richtung 3X bzw. 3Y geschehen. Es ist ebenso möglich, die Messung redundant, also zusätzlich vorzunehmen. Ein Dehnungsmessstreifen ändert seinen elektrischen Widerstand, wenn er gedehnt oder gestaucht wird. Eine Dehnung des Geländerabschnitts 7A in x- bzw. y-Richtung kann dadurch mittels eines Dehnungsmessstreifens gemessen werden und in eine Reibungskraft und damit einen Reibungskoeffizienten umgerechnet werden.

In einer alternativen Ausführungsform (hier nicht gezeigt) kann ganz auf die Platte 15 und damit die Sensoren 15M mit Leitung 15L verzichtet werden und die Messung der Querkräfte im Wesentlichen durch einen Dehnungsmessstreifen, wie oben beschrieben, durchgeführt werden. Für diesen Fall werden die Längskräfte wie oben beschrieben mittels der Bewegung des Geländerabschnitts 7A und der damit korrelierten Bewegung der Platte 13 gemessen. Die Querkräfte werden durch die mittels des Dehnungsmessstreifens gemessene Dehnung des Geländerabschnitts 7A gemessen.

In den verschiedenen oben diskutierten Alternativen kann die Steuereinheit (hier nicht gezeigt) die Reibwerte/Reibungskoeffizienten aus den ermittelten Längskräften und Querkräften berechnen.

In der Figur 3 ist eine Seitenansicht der Ausführungsform gezeigt, die anhand von Figur 2 oben beschrieben wurde. Dabei ist der Transporteur aus Figur 2 in der Figur 3 nicht gezeigt. In Figur 3 ist wiederum die Grundplatte 11 des Messtischs 10 zu sehen. Auf der Grundplatte 11 ist beispielhaft eine Schiene 17 gezeigt. Die Schiene 17 ist hier als im Wesentlichen runde Führungsschiene angedeutet, es sind aber ebenso andere Querschnitte der Schiene denkbar. Auf der Schiene 17 sind zwei Wagen 17W angedeutet, die auf der Schiene 17 rollen oder gleiten können. Die Richtung der Bewegung auf der Schiene 17 ist durch den Pfeil 17X angedeutet. Dabei kann die Bewegung entlang der Schienen durch geeignete Mittel möglichst reibungsarm gestaltet werden und es kann eine Luftkissen- oder elektromagnetische Schwebetechnik oder eine Rolltechnik oder eine reibungsarme Gleittechnik, beispielsweise mit geeigneten Keramiken, gewählt werden. Die Zahl der Wagen 17W ist dabei nicht auf zwei Wagen beschränkt, es ist ebenso denkbar, einen beispielsweise breiteren Wagen zu verwenden oder mehr als zwei Wagen. Die Wagen 17 sind mit der Platte 13 verbunden. In Figur 3 sind sie beispielsweise an der Unterseite der Platte 13 fixiert, beispielsweise angeschraubt, so dass die Bewegung der Platte 13 entlang der Schiene 17 erfolgen kann. Figur 3 zeigt auf der linken Seite einen Sensor 13M, der bereits im Zusammenhang mit der Figur 2 beschrieben wurde. Der Sensor 13M dient beispielsweise dazu, die Bewegung der Platte 13 in x-Richtung zu messen. Ein Verbindungsstück zwischen der Platte 13 und dem Sensor 13M ist mit dem Bezugszeichen 13V gezeigt.

Auf der Oberseite der Platte 13 sind, senkrecht zur Ebene der Figur, zwei Schienen 19 gezeigt. Wiederum ist die Zahl der Schienen rein beispielhaft zu verstehen und es ist ebenso möglich, eine andere Zahl an Schienen zu verwenden. Die Schienen 19 sind auf der Oberfläche der Platte 13 angebracht, beispielsweise angeschraubt oder angeklebt. Ferner sind zwei Wagen 19W gezeigt, die auf den Schienen 19 gleiten oder rollen können. Für die Gleit- oder Rolltechnik gilt analog, was bereits oben in Bezug auf die Schienen 17 gesagt wurde. Die Wagen 19 sind mit der Unterseite der Platte 15 verbunden, beispielsweise verschraubt oder verklebt. Die Bewegung der Platte 15 in y-Richtung, also aus der Figurenebene hinaus kann dadurch gemessen werden. Da diese Bewegung, wie oben bereits erläutert, mit der auf den Geländerabschnitt 7A wirkenden Querkraft korreliert ist, kann dadurch auch die Querkraft gemessen werden.

Die Figur 4 zeigt eine Alternative zu der Ausführungsform, die in Figur 3 gezeigt ist. In Figur 4 sind auf der Grundplatte 11 Schienen 119 angebracht. Auf den Schienen 119 können sich zwei Wagen 119W bewegen. Die Bewegung der Wagen 119W aus der Figurenebene hinaus dient der Messung der Querkräfte. D. h. hier wird mittel der Bewegung der Platte 13 die Kraft in y-Richtung gemessen. Die Wagen 119W sind dabei an der Unterseite der Platte 13 angebracht, beispielsweise verschraubt. Auf der Oberseite der Platte 13 ist eine Schiene 117 vorgesehen, die der Schiene 17 in Figur 3 ähnelt. Auf der Schiene 117 können zwei Wagen 117W gleiten oder rollen, ähnlich den Wagen 17W in Figur 3. Die Wagen 117 W sind mit der Unterseite der Platte 15 verbunden. Die Richtung der Bewegung der Platte 15 ist durch den Pfeil 117X angedeutet. Ein Messsensor 115M ist auf der Platte 13 derart angebracht, dass er die Bewegung der Platte 15 in x-Richtung messen kann. Hierdurch kann die Bewegung des Geländerabschnitts 7A aus Figur 2 bestimmt werden und in eine Längskraft umgerechnet werden. Ein Verbindungsstück zwischen der Platte 15 und dem Sensor 115M ist mit dem Bezugszeichen 115V gezeigt.

In den Figuren 2 - 4 können die Sensoren geeignete Messsensoren sein, die durch Wegmessung, Piezoelektrischen Effekt, kapazitive Messung oder induktive Messung oder optische Messung die einwirkenden Längs- und Querkräfte messen können.

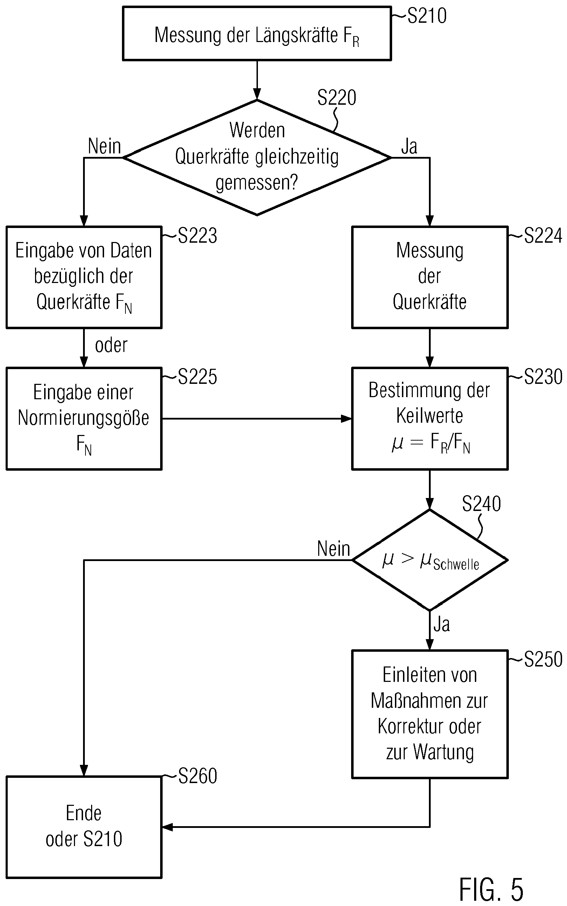

Figur 5 zeigt ein Verfahren zur Ermittlung von Reibwerten gemäß der vorliegenden Erfindung. In Schritt S210 werden die Längskräfte ermittelt, die bei der Reibung von Behältern an einem Geländerabschnitt auftreten, wie es beispielsweise in Figur 2 beschrieben wurde. Hierdurch liegt eine Kraft oder ein Kraftanteil in x-Richtung, also in Transportrichtung vor. In Schritt S220 wird geprüft, ob innerhalb des Verfahrens die Querkräfte im Wesentlichen gleichzeitig mit den Längskräften gemessen werden. Falls das der Fall ist, werden in Schritt S221 die Querkräfte ermittelt. Es versteht sich, dass diese Ermittlung im Wesentlichen gleichzeitig mit der Ermittlung der Längskräfte geschehen kann. Die Ermittlung der Querkräfte kann geschehen, wie es anhand de Figuren 2 - 4 beschrieben wurde. Falls die Frage im Schritt S220 verneint wird, wird auf vorgegebene Daten im Schritt S223 zurückgegriffen. Diese vorgegebenen Daten können im Schritt S223 eingegeben werden. Darunter kann auch verstanden werden, dass diese Daten von einem Speichermedium, beispielsweise einer Speichereinheit ausgelesen werden. Diese Daten werden für die Kraft $F_N$ genommen. Falls mehrere Daten oder gar Datensätze vorliegen, kann auch über diese Daten oder Datensätze gemittelt werden, um die Kraft $F_N$ zu erhalten. Ebenso kann anstelle einer Querkraft eine Normierungsgröße in Schritt S225 eingegeben werden. In Schritt S230 werden die Reibwerte aus dem Verhältnis der Längs- und Querkräfte aus den Schritten S210 einerseits und S221 oder S223/S225 andererseits bestimmt. In Schritt S240 werden die bestimmten Reibwerte mit einem Schwellreibwert verglichen. Falls der Schwellreibwert überschritten wird, können Maßnahmen zur Wartung und/oder zur Korrektur eingeleitet werden. Beispielsweise können Schmiermittel oder sogar Wasser auf die Geländer aufgebracht werden. Ebenfalls ist es möglich, bei der Herstellung der Behälter Additive in die Kunststoffmischung der Vorformlinge zuzugeben, um deren Oberflächeneigenschaften zu beeinflussen. Alle bereits bei der Vorrichtung beschriebenen Maßnahmen sind denkbar. In Schritt S260 endet das Verfahren oder es beginnt erneut mit Schritt S210.

In Schritt S240 kann zusätzlich nicht nur der aktuelle Reibwert betrachtet werden, sondern es ist ebenso möglich, eine zeitliche Entwicklung der Reibwerte und damit der Reibungseigenschaften der betrachteten Behälter mit geeigneten Schwellen zu vergleichen. Dabei ist es möglich, mehrere Schwellen zu betrachten, so dass bestimmte Maßnahmen nur bei Überschreiten bestimmter Schwellen eingeleitet werden. Ebenso kann der Erfolg der eingeleiteten Maßnahmen betrachtet werden. Beispielsweise kann ein geringes Überschreiten einer Schwelle lediglich das Aufbringen von Schmiermitteln oder Wasser auf die Geländer erforderlich machen. Ein deutliches Überschreiten einer Schwelle - oder analog das Überschreiten einer weiteren, höheren Schwelle - kann hingegen eine Wartung notwendig machen.

Es versteht sich, dass die in den zuvor beschriebenen Ausführungsbeispielen genannten Merkmale sich nicht auf die speziell in den Figuren gezeigten Kombinationen beschränken, sondern auch in beliebigen anderen Kombinationen möglich sein können.

**Patentansprüche**

1. Vorrichtung (9) zur Ermittlung von Reibwerten bei Reibung von Behältern, die auf einem Transporteur (3) transportiert werden, an Geländern (5, 7A, 7B) des Transporteurs (3), wobei die Behälter zwischen beidseitig verlaufenden Geländern (5, 7A, 7B) geführt werden, umfassend: einen Messtisch (10); einen ersten Sensor (13M), der auf dem Messtisch (10) befestigt ist, und **dadurch gekennzeichnet, dass** wenigstens ein Abschnitt (7A) der Geländer (5, 7A, 7B) im Bereich des Messtischs (10) relativ zum Messtisch (10) beweglich ausgebildet ist und der Abschnitt (7A) wenigstens eine Bewegung in eine Richtung (3X), genannt x-Richtung, ausführen kann, die im Wesentlichen parallel zur Transportrichtung (3A) des Transporteurs (3) ist, wobei der erste Sensor (13M) eine Kraft misst, mit der der bewegliche Abschnitt des Geländers während des Transports der Behälter bewegt oder gedrängt wird.

2. Vorrichtung (9) nach Anspruch 1, mit einer Steuereinheit und einer Speichereinheit, wobei die Steuereinheit die Messwerte des ersten Sensors (13M) auf der Speichereinheit speichert und so ausgebildet ist, dass sie basierend auf den Messwerten des ersten Sensors (13M) unter Berücksichtigung von Daten bezüglich von Querkräften, die im Wesentlichen senkrecht zur Transportrichtung des Transporteurs (3) durch die Behälter auf die Geländer ausgeübt werden, die Reibwerte bestimmen kann.

3. Vorrichtung (9) nach Anspruch 2, wobei die Steuereinheit so ausgebildet ist, dass sie die Reibwerte und/oder die Messwerte des ersten Sensors (13M) mit einem korrespondierenden Schwellwert vergleicht und vorbeugende und/oder korrigierende Maßnahmen einleitet, wenn der korrespondierende Schwellwert überschritten wird.

4. Vorrichtung (9) nach einem der Ansprüche 2 oder 3, wobei die Daten bezüglich der Querkräfte vorgegebene Daten sind, die beispielsweise auf der Speichereinheit gespeichert sind.

5. Vorrichtung (9) nach wenigstens einem der Ansprüche 1 - 3, mit einem zweiten Sensor (15M), der eine Kraft misst, die im Wesentlichen senkrecht zur x-Richtung (3X) und im Wesentlichen parallel zur Ebene des Transporteurs (3) wirkt und auf den beweglichen Abschnitt (7A) des Geländers (7A, 7B) während des Transports der Behälter ausgeübt wird.

6. Vorrichtung (9) nach wenigstens einem der Ansprüche 1 - 5, wobei der erste und/oder zweite Sensor (13M,15M) ein Dehnungsmessstreifen oder ein piezoelektrischer Sensor ist, der außen am Geländerabschnitt (7A) angebracht ist.

7. Vorrichtung (9) nach Anspruch 5, wobei der zweite Sensor (15M) auf dem Messtisch (10) befestigt ist, wobei der bewegliche Abschnitt (7A) der Geländer (7A, 7B) zusätzlich eine Bewegung in eine Richtung (3Y), genannt y-Richtung, ausführen kann, die im Wesentlichen senkrecht zur x-Richtung (3X) und im Wesentlichen parallel zur Ebene des Transporteurs (3) ist, wobei der zweite Sensor (15M) eine Kraft messen kann, mit der der bewegliche Abschnitt (7A) des Geländers (7A, 7B) in y-Richtung (3Y) während des Transports der Behälter bewegt wird.

8. Vorrichtung (9) nach wenigstens einem der Ansprüche 5 - 7 in Kombination mit einem der Ansprüche 2 oder 3, wobei die Steuereinheit die Messwerte des zweiten Sensors (15M) auf der Speichereinheit speichert und basierend auf den Messwerten des ersten Sensors (13M) unter Berücksichtigung der Daten bezüglich der Querkräfte, die im Wesentlichen senkrecht zur Transportrichtung (3A) des Transporteurs (3) durch die Behälter auf die Geländer (5, 7A, 7B) ausgeübt werden, die Reibwerte bestimmt, wobei die Daten bezüglich der Querkräfte auf den Messwerten des zweiten Sensors (15M) basieren.

9. Vorrichtung (9) nach Anspruch 8, wobei die Steuereinheit die Reibwerte und/oder die Messwerte des zweiten Sensors (15M) mit einem entsprechenden Schwellwert vergleicht und vorbeugende und/oder korrigierende Maßnahmen einleitet, wenn der entsprechende Schwellwert überschritten wird.

10. Vorrichtung (9) nach einem der Ansprüche 3 oder 9, wobei die vorbeugenden Maßnahmen eine Wartung des Transporteurs (3) umfassen, und wobei die korrigierenden Maßnahmen wenigstens eine aus den folgenden Maßnahmen zur Reduzierung der Reibung umfassen: Hinzufügen von Additiven, beispielsweise Schmierstoffen, beim Fertigungsprozess der Behälter oder Vorformlinge, Aufbringen von Gleitmitteln oder Aufsprühen von Wasser auf die Geländer (5, 7A, 7B) des Transporteurs (3), Aufsprühen von Wasser auf die Behälter, Aufbringen von Gleitmittel auf die Vorformlinge oder allgemein das Verändern von Prozessparametern bei der Herstellung von Vorformlingen oder Behältern.

11. Vorrichtung (9) nach wenigstens einem der Ansprüche 1 - 10, mit einer ersten Schiene (17), die auf dem Messtisch (10) befestigt ist und die im Wesentlichen in x-Richtung (3X) zeigt, wobei die Bewegung des Abschnitts (7A) des Geländers (7A, 7B) mittels der ersten Schiene (17) in x-Richtung (3X) erfolgen kann.

12. Vorrichtung (9) nach wenigstens einem der Ansprüche 7 - 11, mit einer zweiten Schiene (19), die auf dem Messtisch (10) befestigt ist und die im Wesentlichen in y-Richtung (3Y) zeigt, wobei die Bewegung des Abschnitts (7A) des Geländers (7A, 7B) mittels der zweiten Schiene (19) in y-Richtung (3Y) erfolgen kann.

13. Vorrichtung (9) nach Anspruch 12, wobei der Messtisch (10) eine Grundplatte (11) umfasst, wobei die erste Schiene (17) auf der Grundplatte (11) befestigt ist, wobei auf der ersten Schiene (17) sich eine weitere Platte (13) bewegen kann, wobei die Bewegung der weiteren Platte (13) in die Richtung erfolgt, die der Richtung der ersten Schiene (17) entspricht, wobei auf der weiteren Platte (13) die zweite Schiene (19) befestigt ist, wobei auf der zweiten Schiene (19) die Bewegung des Abschnitts (7A) des Geländers (7A, 7B) in die Richtung erfolgen kann, die der zweiten Schiene (19) entspricht; oder wobei die zweite Schiene (119) auf der Grundplatte (11) befestigt ist, wobei auf der zweiten Schiene (119) sich eine weitere Platte (13) bewegen kann, wobei die Bewegung der weiteren Platte (13) in die Richtung erfolgt, die der Richtung der zweiten Schiene (119) entspricht, wobei auf der weiteren Platte (13) die erste Schiene (117) befestigt ist, wobei auf der ersten Schiene (117) die Bewegung des Abschnitts (7A) des Geländers (7A, 7B) in die Richtung erfolgen kann, die der ersten Schiene (117) entspricht.

14. Verfahren zur Ermittlung von Reibwerten bei Reibung von Behältern, die auf einem Transporteur (3) transportiert werden, an Geländern (5, 7A, 7B) des Transporteurs (3), wobei die Behälter zwischen beidseitig verlaufenden Geländern (5, 7A, 7B) geführt werden, **dadurch gekennzeichnet, dass** wenigstens ein Abschnitt (7A) der Geländer (7A, 7B) beweglich ausgebildet ist und der Abschnitt (7A) wenigstens eine Bewegung in eine Richtung (3X), genannt x-Richtung, ausführen kann, die im Wesentlichen parallel zur Transportrichtung (3A) des Transporteurs (3) ist, so dass eine Kraft gemessen werden kann, mit der der bewegliche Abschnitt (7A) des Geländers (7A, 7B) während des Transports der Behälter auf dem Transporteur (3) bewegt wird.

15. Verfahren nach Anspruch 14, wobei die Reibwerte bestimmt werden aus den Messwerten der Kraft auf den beweglichen Abschnitt (7A) des Geländers (7A, 7B) in x-Richtung (3X) unter Berücksichtigung von Daten bezüglich von Querkräften, die im Wesentlichen senkrecht zur Transportrichtung (3A) des Transporteurs (3) durch die Behälter auf die Geländer (7A, 7B) ausgeübt werden.

16. Verfahren nach Anspruch 14 oder 15, wobei die Reibwerte und/oder die Messwerte der Kraft in x-Richtung (3X) mit einem korrespondierenden Schwellwert verglichen werden und vorbeugende und/oder korrigierende Maßnahmen eingeleitet werden, wenn der korrespondierende Schwellwert überschritten wird.

17. Verfahren nach Anspruch 15 oder 16, wobei die Daten bezüglich der Querkräfte vorgegebene Daten sind.

18. Verfahren nach wenigstens einem der Ansprüche 14 - 16, wobei eine Kraft gemessen wird, die in eine Richtung (3Y), genannt y-Richtung, die im Wesentlichen senkrecht zur x-Richtung (3X) und im Wesentlichen parallel zur Ebene des Transporteurs (3) ist, auf den beweglichen Abschnitt (7A) des Geländers (7A, 7B) während des Transports der Behälter ausgeübt wird.

19. Verfahren nach wenigstens einem der Ansprüche 14 - 16, wobei der bewegliche Abschnitt (7A) der Geländer (7A, 7B) zusätzlich eine Bewegung in eine Richtung (3Y), genannt y-Richtung, ausführen kann, die im Wesentlichen senkrecht zur x-Richtung (3X) und im Wesentlichen parallel zur Ebene des Transporteurs (3) ist, wobei die Kraft gemessen werden kann, mit der der bewegliche Abschnitt (7A) des Geländers (7A, 7B) in y-Richtung (3Y) bewegt wird, während des Transports der Behälter.

20. Verfahren nach Anspruch 19 in Kombination mit einem der Ansprüche 15 oder 16, wobei die Reibwerte aus den Messwerten der Kraft in x-Richtung unter Berücksichtigung der Daten bezüglich der Querkräfte, die im Wesentlichen senkrecht zur Transportrichtung (3A) des Transporteurs (3) durch die Behälter auf die Geländer (7A, 7B) ausgeübt werden, bestimmt werden, wobei die Daten bezüglich der Querkräfte auf den Messwerten bezüglich der Kraft in y-Richtung (3Y) basieren.

21. Verfahren nach Anspruch 20, wobei die Messwerte der Kraft in y-Richtung (3Y) mit einem korrespondierenden Schwellwert verglichen werden und vorbeugende und/oder korrigierende Maßnahmen eingeleitet werden, wenn der korrespondierende Schwellwert überschritten wird.

22. Verfahren nach einem der Ansprüche 16 oder 21, wobei die vorbeugenden Maßnahmen eine Wartung des Transporteurs (3) umfassen, und wobei die korrigierenden Maßnahmen wenigstens eine aus den folgenden Maßnahmen zur Reduzierung der Reibung umfassen: Hinzufügen von Additiven, beispielsweise Schmierstoffen, beim Fertigungsprozess der Behälter oder Vorformlinge, Aufbringen von Gleitmitteln oder Aufsprühen von Wasser auf die Geländer (5, 7A, 7B) des Transporteurs (3), Aufsprühen von Wasser auf die Behälter, Aufbringen von Gleitmittel auf die Vorformlinge oder allgemein das Verändern von Prozessparametern bei der Herstellung von Vorformlingen oder Behältern.

**Claims**

1. Device (9) for determining coefficients of friction when friction occurs between containers, which are transported on a conveyor (3), and railings (5, 7A, 7B) of the conveyor (3), the containers being guided between railings (5, 7A, 7B) extending on both sides, comprising:

   a measuring table (10);
   a first sensor (13M) which is fastened to the measuring table (10),

   and **characterised in that** at least one portion (7A) of the railings (5, 7A, 7B) in the region of the measuring table (10) is movable relative to the measuring table (10) and the portion (7A) can carry out at least one movement in a direction (3X), specifically the x-direction, which is substantially parallel to the transport direction (3A) of the conveyor (3), the first sensor (13M) measuring a force, by means of which the movable portion of the railing is moved or thrust during the transport of the containers.

2. Device (9) according to claim 1, having a control unit and a storage unit, wherein the control unit stores the measured values of the first sensor (13M) in the storage unit and is designed such that it can determine coefficients of friction on the basis of the measured values of the first sensor (13M) taking into account data relating to transverse forces which are exerted on the railings by the containers substantially perpendicularly with respect to the transport direction of the conveyor (3).

3. Device (9) according to claim 2, wherein the control unit is designed such that it compares the coefficients of friction and/or the measured values of the first sensor (13M) with a corresponding threshold value and initiates preventive and/or corrective measures if the corresponding threshold value is exceeded.

4. Device (9) according to either claim 2 or claim 3, wherein the data relating to the transverse forces are predetermined data which are stored, for example, in the storage unit.

5. Device (9) according to at least one of claims 1 to 3, having a second sensor (15M) which measures a force that acts substantially perpendicularly with respect to the x-direction (3X) and substantially in parallel with the plane of the conveyor (3) and is exerted on the movable portion (7A) of the railing (7A, 7B) during the transport of the containers.

6. Device (9) according to at least one of claims 1 to 5, wherein the first and/or second sensor (13M, 15M) is a strain gauge or a piezoelectric sensor which is attached to the outside of the railing portion (7A).

7. Device (9) according to claim 5, wherein the second sensor (15M) is fastened to the measuring table (10), wherein the movable portion (7A) of the railings (7A, 7B) can additionally carry out a movement in a direction (3Y), specifically the y-direction, which is substantially perpendicular with respect to the x-direction (3X) and substantially parallel to the plane of the conveyor (3), wherein the second sensor (15M) can measure a force, by means of which the movable portion (7A) of the railing (7A, 7B) is moved in the y-direction (3Y) during the transport of the containers.

8. Device (9) according to at least one of claims 5 to 7 in combination with either claim 2 or claim 3, wherein the control unit stores the measured values of the second sensor (15M) in the storage unit and determines the coefficients of friction on the basis of the measured values of the first sensor (13M) taking into account the data relating to the transverse forces which are exerted on the railings (5, 7A, 7B) by the containers substantially perpendicularly with respect to the transport direction (3A) of the conveyor (3), wherein the data relating to the transverse forces are based on the measured values of the second sensor (15M).

9. Device (9) according to claim 8, wherein the control unit compares the coefficients of friction and/or the measured values of the second sensor (15M) with a corresponding threshold value and initiates preventive and/or corrective measures if the corresponding threshold value is exceeded.

10. Device (9) according to either claim 3 or claim 9, wherein the preventive measures comprise maintenance of the conveyor (3), and wherein the corrective measures comprise at least one of the following measures in order to reduce friction:
    adding additives, for example lubricants, during the manufacturing process of the containers or preforms, applying lubricating agents or spraying water onto the railings (5, 7A, 7B) of the conveyor (3), spraying water onto the containers, applying lubricating agent to the preforms or generally changing process parameters in the production of preforms or containers.

11. Device (9) according to at least one of claims 1 to 10, having a first rail (17) which is fastened to the measuring table (10) and which points substantially in the x-direction (3X), wherein the portion (7A) of the railing (7A, 7B) can move in the x-direction (3X) by means of the first rail (17).

12. Device (9) according to at least one of claims 7 to 11, having a second rail (19) which is fastened to the measuring table (10) and which points substantially in the y-direction (3Y), wherein the portion (7A) of the railing (7A, 7B) can move in the y-direction (3Y) by means of the second rail (19).

13. Device (9) according to claim 12, wherein the measuring table (10) comprises a base plate (11), wherein the first rail (17) is fastened to the base plate (11), wherein a further plate (13) can be moved on the first rail (17), wherein the further plate (13) moves in the direction which corresponds to the direction of the first rail (17), wherein the second rail (19) is fastened to the further plate (13), wherein the portion (7A) of the railing (7A, 7B) can move on the second rail (19) in the direction which corresponds to the second rail (19);
or wherein the second rail (119) is fastened to the base plate (11), wherein a further plate (13) can be moved on the second rail (119), wherein the further plate (13) moves in the direction which corresponds to the direction of the second rail (119), wherein the first rail (117) is fastened to the further plate (13), wherein the portion (7A) of the railing (7A, 7B) can move on the first rail (117) in the direction which corresponds to the first rail (117).

14. Method for determining coefficients of friction when friction occurs between containers, which are transported on a conveyor (3), and railings (5, 7A, 7B) of the conveyor (3), wherein the containers are guided between railings (5, 7A, 7B) extending on both sides, **characterised in that** at least one portion (7A) of the railings (7A, 7B) is movable and the portion (7A) can carry out at least one movement in a direction (3X), specifically the x-direction, which is substantially parallel to the transport direction (3A) of the conveyor (3) such that a force can be measured, by means of which the movable portion (7A) of the railing (7A, 7B) is moved during the transport of the containers on the conveyor (3).

15. Method according to claim 14, wherein the coefficients of friction are determined from the measured values of the force on the movable portion (7A) of the railing (7A, 7B) in the x-direction (3X) taking into account data relating to transverse forces which are exerted by the containers on the railings (7A, 7B) substantially perpendicularly with respect to the transport direction (3A) of the conveyor (3).

16. Method according to either claim 14 or claim 15, wherein the coefficients of friction and/or the measured values of the force in the x-direction (3X) are compared with a corresponding threshold value, and preventive and/or corrective measures are initiated if the corresponding threshold value is exceeded.

17. Method according to either claim 15 or claim 16, wherein the data relating to the transverse forces are predetermined data.

18. Method according to at least one of claims 14 to 16, wherein a force is measured which is exerted on the movable portion (7A) of the railing (7A, 7B) during the transport of the containers in a direction (3Y), specifically the y-direction, which is substantially perpendicular with respect to the x-direction (3X) and substantially parallel to the plane of the conveyor (3).

19. Method according to at least one of claims 14 to 16, wherein the movable portion (7A) of the railings (7A, 7B) can additionally carry out a movement in a direction (3Y), specifically the y-direction, which is substantially perpendicular with respect to the x-direction (3X) and substantially parallel to the plane of the conveyor (3), wherein the force can be measured, by means of which the movable portion (7A) of the railing (7A, 7B) is moved in the y-direction (3Y) during the transport of the containers.

20. Method according to claim 19 in combination with either claim 15 or claim 16, wherein the coefficients of friction are determined from the measured values of the force in the x-direction taking into account the data relating to the transverse forces which are exerted on the railings (7A, 7B) by the containers substantially perpendicularly with respect to the transport direction (3A) of the conveyor (3), wherein the data relating to the transverse forces are based on the measured values relating to the force in the y-direction (3Y).

21. Method according to claim 20, wherein the measured values of the force in the y-direction (3Y) are compared with a corresponding threshold value, and preventive and/or corrective measures are initiated if the corresponding threshold value is exceeded.

22. Method according to either claim 16 or claim 21, wherein the preventive measures comprise maintenance of the conveyor (3), and wherein the corrective measures comprise at least one of the following measures in order to reduce friction:

adding additives, for example lubricants, during the manufacturing process of the containers or preforms, applying lubricating agents or spraying water onto the railings (5, 7A, 7B) of the conveyor (3), spraying water onto the containers, applying lubricating agent to the preforms or generally changing process parameters in the production of preforms or containers.

## Revendications

1. Dispositif (9) pour déterminer les coefficients de frottement lorsque des conteneurs qui sont transportés sur un convoyeur (3) frottent contre des rambardes (5, 7A, 7B) du convoyeur (3), les conteneurs étant guidés entre des rambardes (5, 7A, 7B) circulant des deux côtés, comprenant: une table de mesure (10); un premier capteur (13M) monté sur la table de mesure (10), et **caractérisé en ce qu**'au moins une partie (7A) des rambardes (5, 7A, 7B) dans la zone de la table de mesure (10) est conçue pour être mobile par rapport à la table de mesure (10) et la partie (7A) a au moins un mouvement dans une direction (3X), appelée direction x, qui est sensiblement parallèle à la direction de transport (3A) du convoyeur (3), dans laquelle le premier capteur (13M) mesure une force avec laquelle la partie mobile de la rambarde est déplacée ou poussée pendant le transport des conteneurs.

2. Dispositif (9) selon la revendication 1, comportant une unité de commande et une unité de mémoire, dans lequel l'unité de commande mémorise les valeurs de mesure du premier capteur (13M) sur l'unité de mémoire et est conçue de telle sorte qu'elle peut déterminer les coefficients de frottement sur la base des valeurs de mesure du premier capteur (13M) en tenant compte de données relatives aux forces transversales exercées sur les garde-corps par les conteneurs sensiblement perpendiculairement à la direction de transport du convoyeur (3).

3. Dispositif (9) selon la revendication 2, dans lequel l'unité de commande est conçue pour comparer les valeurs de frottement et/ou les valeurs mesurées du premier capteur (13M) avec une valeur seuil correspondante et pour déclencher des mesures préventives et/ou correctives si la valeur seuil correspondante est dépassée.

4. Dispositif (9) selon l'une des revendications 2 ou 3, dans lequel les données concernant les forces transversales sont des données prédéterminées qui sont stockées, par exemple, sur l'unité de stockage.

5. Dispositif (9) selon au moins une des revendications 1-3, comprenant un second capteur (15M) mesurant une force agissant plus ou moins de façon perpendiculaire à la direction x (3X) et sensiblement parallèle au plan du convoyeur (3) et exercée sur la partie mobile (7A) de la rambarde (7A, 7B) pendant le transport des conteneurs.

6. Dispositif (9) selon au moins l'une des revendications 1 à 5, dans lequel le premier et/ou le second capteur (13M, 15M) est une jauge de contrainte ou un capteur piézoélectrique monté sur l'extérieur de la partie de la rambarde (7A).

7. Appareil (9) selon la revendication 5, dans lequel le second capteur (15M) est monté sur la table de mesure (10), dans lequel la partie mobile (7A) des rambardes (7A, 7B) peut en outre effectuer un mouvement dans une direction (3Y) appelée direction y, qui est sensiblement perpendiculaire à la direction x (3X) et sensiblement parallèle au plan du convoyeur (3), le second capteur (15M) étant capable de mesurer une force avec laquelle la partie mobile (7A) de la rambarde (7A, 7B) est déplacée dans la direction y (3Y) pendant le transport des conteneurs.

8. Dispositif (9) selon au moins l'une des revendications 5 à 7 en combinaison avec l'une des revendications 2 ou 3, dans lequel l'unité de commande mémorise les valeurs de mesure du second capteur (15M) sur l'unité de mémoire et détermine les coefficients de frottement sur la base des valeurs de mesure du premier capteur (13M) en tenant compte des données concernant les forces transversales exercées par les conteneurs sur les rambardes (5, 7A, 7B) sensiblement perpendiculaires à la direction de transport (3A) du convoyeur (3) par les conteneurs, dans lequel les données concernant les forces transversales sont fondées sur les valeurs de mesure du second capteur (15M).

9. Dispositif (9) selon la revendication 8, dans lequel l'unité de commande compare les valeurs de frottement et/ou les valeurs mesurées du second capteur (15M) avec une valeur seuil correspondante et déclenche des mesures préventives et/ou correctives en cas de dépassement de la valeur seuil correspondante.

10. Dispositif (9) selon l'une des revendications 3 ou 9, dans lequel les mesures préventives comprennent l'entretien du convoyeur (3), et dans lequel les mesures correctives comprennent au moins l'une des mesures suivantes pour réduire le frottement: l'ajout d'additifs, tels que des lubrifiants, au cours du processus de fabrication des récipients ou des préformes, l'application de lubrifiants ou la pulvérisation d'eau sur les rambardes (5, 7A, 7B) du convoyeur (3), la pulvérisation d'eau sur les récipients, l'application de lubrifiants sur les préformes ou, en général, la modification des paramètres du processus au cours de la fabrication des préformes ou des récipients.

11. Dispositif (9) selon au moins une des revendications 1 à 10, comprenant un premier rail (17) qui est fixé sur la table de mesure (10) et qui est orienté sensiblement dans la direction x (3X), dans lequel le déplacement de la section (7A) de la rambarde (7A, 7B) peut être effectué au moyen du premier rail (17) dans la direction x (3X).

12. Dispositif (9) selon au moins une des revendications 7 à 11, comprenant un second rail (19) qui est fixé sur la table de mesure (10) et qui est orienté sensiblement dans la direction y (3Y), le déplacement de la section (7A) de la rambarde (7A, 7B) pouvant être effectué au moyen du second rail (19) dans la direction y (3Y).

13. Appareil (9) selon la revendication 12, dans lequel la table de mesure (10) comprend une plaque de base (11), le premier rail (17) étant fixé à la plaque de base (11), tandis qu'une autre plaque (13) peut se déplacer sur le premier rail (17), le mouvement de l'autre plaque (13) étant dans la direction correspondant à la direction du premier rail (17), sur laquelle autre plaque (13) est fixé le second rail (19), sur lequel second rail (19) le mouvement de la partie (7A) de la rambarde (7A, 7B) peut être dans la direction correspondant au second rail (19); ou le second rail (119) étant fixé à la plaque de base (11), tandis qu'une autre plaque (13) peut se déplacer sur le second rail (119), le mouvement de l'autre plaque (13) étant dans la direction correspondant à la direction du second rail (119), sur lequel autre plaque (13) le premier rail (117) est fixé, sur lequel premier rail (117) le mouvement de la partie (7A) de la rambarde (7A, 7B) peut être dans la direction correspondant au premier rail (117).

14. Procédé pour déterminer des coefficients de frottement lorsque des conteneurs qui sont transportés sur un convoyeur (3) frottent contre des rambardes (5, 7A, 7B) du convoyeur (3), les conteneurs étant guidés entre des rambardes (5, 7A, 7B) circulant des deux côtés, caractérisé en **ce qu'**au moins une section (7A) des rambardes (7A, 7B) est mobile et la partie (7A) peut effectuer au moins un mouvement dans une direction (3X), appelée direction x, qui est sensiblement parallèle à la direction de transport (3A) du convoyeur (3), de sorte qu'on peut mesurer une force avec laquelle la partie mobile (7A) de la rambarde (7A, 7B) est déplacée pendant le transport des conteneurs sur le convoyeur (3).

15. Procédé selon la revendication 14, dans lequel les coefficients de frottement sont déterminés à partir des valeurs mesurées de la force exercée sur la partie mobile (7A) de la rambarde (7A, 7B) dans la direction x (3X), en tenant compte des données relatives aux forces transversales exercées sur les rambardes (7A, 7B) par les conteneurs plus ou moins de façon perpendiculaire à la direction de transport (3A) du convoyeur (3).

16. Procédé selon la revendication 14 ou 15, dans lequel les coefficients de frottement et/ou les valeurs mesurées de la force dans la direction x (3X) sont comparés à une valeur seuil correspondante et des mesures préventives et/ou correctives sont initiées si la valeur seuil correspondante est dépassée.

17. Procédé selon les revendications 15 ou 16, dans laquelle les données concernant les forces transversales sont des données prédéterminées.

18. Procédé selon au moins une des revendications 14 à 16, dans lequel on mesure une force qui est exercée dans une direction (3Y), dite direction y, plus ou moins perpendiculaire à la direction x (3X) et sensiblement parallèle au plan du convoyeur (3) sur la partie mobile (7A) de la rambarde (7A, 7B) pendant le transport des conteneurs.

19. Procédé selon au moins l'une des revendications 14 à 16, dans lequel la partie mobile (7A) des rambardes (7A, 7B) peut en outre effectuer un mouvement dans une direction (3Y), appelée direction y, qui est sensiblement perpendiculaire à la direction x (3X) et sensiblement parallèle au plan du convoyeur (3), dans lequel la force avec laquelle la partie mobile (7A) des rambardes (7A, 7B) est déplacée dans la direction y (3Y) peut être mesurée pendant le transport des conteneurs.

20. Procédé selon la revendication 19 en combinaison avec l'une des revendications 15 ou 16, dans lequel les coefficients de frottement sont déterminés à partir des valeurs mesurées de la force dans la direction x en tenant compte des données relatives aux forces transversales exercées sur les rambardes (7A, 7B) sensiblement perpendiculairement à la direction de transport (3A) du convoyeur (3) par les conteneurs, dans lequel les données relatives aux forces transversales sont fondées sur les valeurs mesurées relatives à la force dans la direction y (3Y).

21. Procédé selon la revendication 20, dans lequel les valeurs mesurées de la force dans la direction y (3Y) sont comparées avec une valeur seuil correspondante et des mesures préventives et/ou des mesures correctives sont prises si la valeur seuil correspondante est dépassée.

**22.** Procédé selon l'une des revendications 16 ou 21, dans lequel les mesures préventives comprennent l'entretien du convoyeur (3), et dans lequel les mesures correctives comprennent au moins l'une des mesures suivantes pour réduire le frottement: ajouter des additifs, par exemple des lubrifiants, pendant le processus de fabrication des récipients ou des préformes, appliquer des lubrifiants ou pulvériser de l'eau sur les rambardes (5, 7A, 7B) du convoyeur (3), pulvériser de l'eau sur les récipients, appliquer des lubrifiants sur les préformes ou, en général, modifier les paramètres du processus pendant la fabrication des préformes ou des récipients.

FIG. 1

FIG. 2

FIG. 3

FIG. 4

EP 2 581 727 B1

```
┌─────────────────────────────────────┐
│   Messung der Längskräfte F_R        │ ~S210
└─────────────────────────────────────┘
                    │
                    ▼
              ╱──────────────╲   S220
        ╱────────────────────────────╲
 Nein ╱          Werden                ╲ Ja
◄─────       Querkräfte gleichzeitig    ─────►
       ╲          gemessen?            ╱
        ╲────────────────────────────╱
              ╲──────────────╱
         │                              │
         ▼                              ▼
┌────────────────────┐ ~S223  ┌────────────────────┐ ~S224
│  Eingabe von Daten │        │      Messung       │
│   bezüglich der    │        │        der         │
│   Querkräfte F_N   │        │     Querkräfte     │
└────────────────────┘        └────────────────────┘
         │ oder                         │
         ▼                              ▼
┌────────────────────┐ ~S225  ┌────────────────────┐ ~S230
│   Eingabe einer    │        │  Bestimmung der    │
│   Normierungsgöße  │───────►│     Keilwerte      │
│        F_N         │        │  μ = F_R/F_N       │
└────────────────────┘        └────────────────────┘
                                        │
                                        ▼
                                  ╱──────────╲   S240
                            ╱──────────────────────╲
                    Nein   ╱                        ╲
         ◄───────────────       μ > μ_Schwelle
         │                  ╲                        ╱
         │                   ╲──────────────────────╱
         │                        ╲──────────╱
         │                             │ Ja
         │                             ▼
         │                   ┌────────────────────┐ ~S250
         │                   │   Einleiten von    │
         │                   │  Maßnahmen zur     │
         │                   │  Korrektur oder    │
         │                   │   zur Wartung      │
         │                   └────────────────────┘
         ▼                             │
┌────────────────────┐ ~S260           │
│       Ende         │◄────────────────┘
│    oder S210       │
└────────────────────┘
```

$\mu = F_R/F_N$

$\mu > \mu_{Schwelle}$

FIG. 5

**EP 2 581 727 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3340457 A1
- JP 55125429 A
- EP 1790968 A1